(19) **Europäisches Patentamt**

**European Patent Office**

**Office européen des brevets**

(11) **EP 1 031 369 A1**

(12) **EUROPEAN PATENT APPLICATION**

(43) Date of publication:
30.08.2000 Bulletin 2000/35

(51) Int Cl.⁷: **B01D 46/42**, B01D 46/04

(21) Application number: **99303786.0**

(22) Date of filing: **14.05.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **24.02.1999 AU PP883399**

(71) Applicant: **COMMONWEALTH SCIENTIFIC AND
INDUSTRIAL RESEARCH ORGANISATION
Campbell, ACT 2612 (AU)**

(72) Inventor: **Helstroom, Rob
North Ryde NSW 1670 (AU)**

(74) Representative: **Ablewhite, Alan James
MARKS & CLERK,
57/60 Lincoln's Inn Fields
London WC2A 3LS (GB)**

(54) **A filter bag monitoring system**

(57) A filter bag monitoring system comprising apparatus for measuring the flow rate of gas leaving filter bag (1), the number of particles leaving the filter bag and the pressure drop across the filter bag. A Pitot tube (5) can be used to measure the flow rate of gas and its body, when electrically insulated from the filter bag support, can be used to measure the cumulative tribo-electric charge of entrained particles leaving the filter bag and hence the number of such particles. Alternatively the cumulative tribo-electric charge of particles leaving the filter bag can be measured by an electrically insulated wire (8) supported across the filter bag exit.

FIGURE 1

EP 1 031 369 A1

## Description

This invention relates to apparatus for monitoring the performance of a filter bag and, in particular, to apparatus for monitoring the performance of a pulse-jet (reverse pulse) filter bag. Generally, the filter bags concerned are used by industry for cleaning suspended dust particles from gas streams.

Pulse-jet filter bag installations for collecting and removing suspended dust from a gas stream usually comprise a series of filter bags within one or more compartments. These bags, typically 125 to 200 mm in diameter and up to 8 metres long, are suspended from a cell plate (or tubesheet) forming the ceiling of the filter compartment. The open mouth of the bag is sealed into a hole in the cell plate while the tubular body of the bag, with its closed base, is free to hang in the main chamber of the filter beneath the cell plate. A wire cage is inserted into the bag to prevent it collapsing under normal gas flow which is drawn from the outside to the inside of the bag, and thence out of the mouth of the bag, by a fan producing suction within the outlet chamber above the cell plate. The dust cake is built up on the outer surface of the filter bag as particles carried by the inlet gas stream impact onto the filter as they attempt to follow the gas flow through the filter material. Depending on the volume flow rate of gas needing to be filtered, an actual filter plant may consist of somewhere between ten and ten-thousand of these bags housed in one or more compartments.

A fixed or moving manifold outlet for compressed air is positioned above the mouths of the filter bags to deliver a short pulse of air into and down the length of the bag in a reverse direction to the normal gas flow. This jet of air causes the filter cake to be flicked off the exterior of the bag by a combination of flexing of the filter material and the reversed flow. The build-up of dust on the cleaned bag recommences as soon as this cleaning pulse has dissipated.

Fabric filters are seeing widespread use for gas cleaning in many industrial processes. They have a high collection efficiency producing a gas stream with a very low level of particulates. Operating costs may, however be considerable as the filter bags must be replaced when either the pressure drop across the filter, or bag failures, or dust emissions become excessive. The choice of filter bag material is a primary consideration affecting the performance and lifetime of the filter bag. Other factors such as the frequency and effectiveness of the periodic filter cleaning operation (in this case by a momentary reverse pulse of high pressure air) also have the potential to greatly influence the operating costs of the filter plant. Apparatus which would allow these factors to be measured and assessed on-line, in a working filter, would greatly assist in the selection of filter media as well in optimising filter performance and the effectiveness of the periodic pulse cleaning technique.

A need therefore exists for instrumentation apparatus for the on-line measurement of pulse-jet filter gas flow and dust emissions. For greatest benefit to the user, this apparatus should preferably be capable of being fitted to several existing filter bags in a filter with minimal disturbance to the bags, cages, or other parts of the filter installation and without interfering with bag cleaning. Desirably, it should be self-contained and automatically record data that can quantify the bag flows and pressure drops (and hence the bag drag) as well as dust emission rates before and after cleaning pulses to provide a useful means of characterising individual test bags and to compare their behaviour. An object of this invention is to meet the need for on-line measurement of pulse-jet filter gas flow and dust emissions.

## DESCRIPTION OF THE INVENTION

The present invention provides a filter bag monitoring system comprising flow rate measuring means for measuring gaseous flow rate at an exit of a filter bag, entrained particle measuring means for measuring the number of dust particles entrained in gas flowing from the exit of the filter bag, pressure drop measuring means for measuring pressure drop across the filter bag, and a data processing means, the data processing means being capable of automatically processing and recording data transmitted from the flow rate measuring means, the entrained particle measuring means, and the pressure drop measuring means.

Preferably the flow rate measuring means has a body that is so arranged that it is capable of functioning as the entrained particle measuring means.

The design of this invention can be altered to suit the many variants of reverse pulse filters available for different applications, but the basic principles remain the same. It preferably comprises one or more sensors fitted to a circular mounting ring that is placed over the mouth of the filter bag. A Pitot tube (or similar) device for measurement of gas velocity is preferably the principal sensor fitted to the ring. By means of a clamping arrangement, the Pitot tube may be held in a fixed alignment to point directly down into the gas flow exhausting from the bag. The degree of turbulence in the flow passing out of the straight bag is normally sufficient to ensure that the gas velocity measured in the mouth of the bag varies by less than 10% at all cross-sectional bag positions out to 90% of the cage radius. Hence, for this general degree of precision in flow measurement, the Pitot tube may be placed off-centre from the axis of the bag and in a manner that does not significantly interfere with the entry of the pulse cleaning air into the bag. Moreover, for the purpose of accurately comparing the gas flows through identically-sized filter bags made of different filter media, it is only necessary to provide a means of reproducibly mounting the Pitot tube in each bag mouth.

Naturally occurring electrostatic (tribo-electric) charge on the filtered dust is preferably used to measure the quantity of entrained particles (the dust emissions) in the gas stream passing out of the mouth of the filter bag. This charge may be sensed by the body of the Pitot tube which is electrically insulated from the mounting ring, and hence, from the structure of the filter. As such, the metallic body of the Pitot tube is free to pick up electrical charge either directly from dust particles in the gas stream that strike the exterior surface of the Pitot tube or, indirectly, from dust particles that pass sufficiently close to induce a charge in the body of the Pitot tube. The body of the Pitot tube is preferably used as the entrained particle measuring means

Alternatively, the entrained particle measuring means may comprise a single strand of wire supported diametrically across the ring (and hence directly across the bag mouth) on two electrically insulating stand-offs. This also acts as a sensor of tribo-electric charge on passing dust.

A conventional pair of pressure tappings across the filter chamber provides a measurement of the differential pressure drop (filter DP) across all bags in the chamber.

The bag flow velocity, tribo-electric charge and filter DP sensing means are all connected to a signal processing system outside of the filter chamber that continuously calculates the gas flow, bag drag and dust emissions.

The invention also provides a method of monitoring the performance of a filter bag including passing flue gas containing entrained particles through a filter bag, measuring pressure drop across the filter bag, measuring the number of entrained particles emitted from the filter bag and measuring the velocity of gas exiting from the filter bag.

The method preferably includes calculating the quantity of dust per unit volume contained in gas exiting from the filter bag.

DETAILED DESCRIPTION OF THE INVENTION

Figure 1 is a vertical cross-section of the top of a filter bag assembly;
Figure 2 is a plan view of the top of a filter bag assembly; and
Figure 3 is a schematic representation of the instrumentation, data recording and processing system.

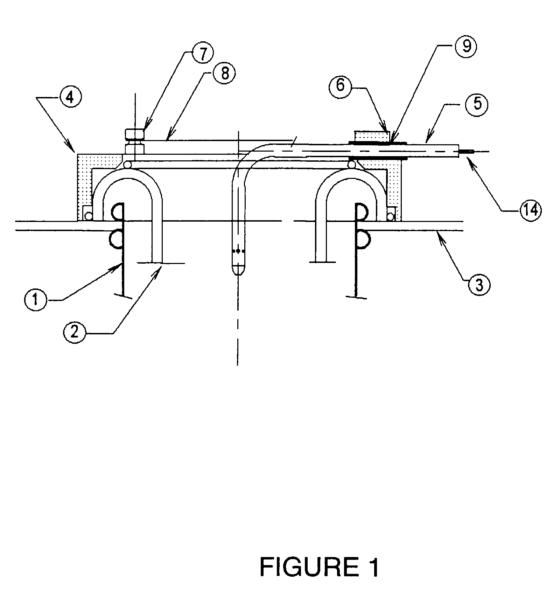

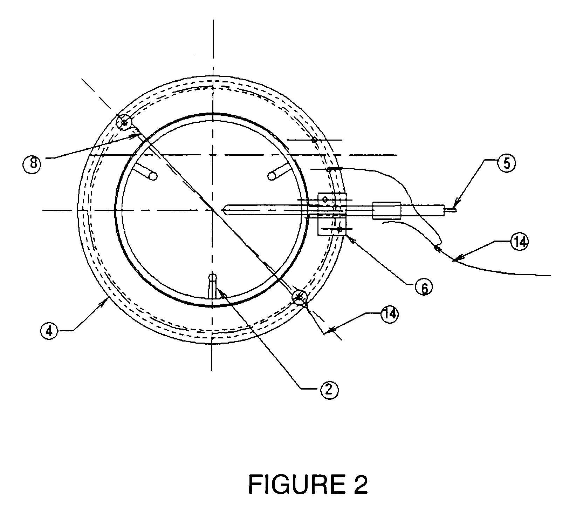

Referring to the three figures (Figures 1, 2 and 3), the filter bag (1) and cage (2) remain normally installed in the tubesheet or cell plate (3) and the support ring (4) of the bag head monitor assembly (13) is located over the elements of the cage (2) which protrude from the mouth of the bag (1) and locate on the cell plate (3). The support ring (4) has a Pitot type measuring device (5) firmly and accurately mounted on it by clamp block (6) to measure the flow of gas through the mouth of the bag. Two flexible tubes (11), that may be conveniently bundled as a concentric (or coaxial) pair, are fitted on to the Pitot tube (5) and run to a pressure-sensing transducer (17) in an instrumentation enclosure (15). This transducer (17) reads the differential pressure developed by the gas flow impinging upon the Pitot tube (5) and thereby enables the volume of gas flowing out of the mouth of the bag to be calculated according to:

$$v = \alpha \times \sqrt{\frac{101.325}{P_s} \times \frac{T}{293} \times DP_v}. \qquad (1)$$

Where $V$ is the gas velocity (m/s), $\alpha$ is a constant of proportionality that is dependent on the composition of the gas (1.288 for air), $P_S$ is the absolute static pressure of the gas stream (kPa) that is measured from the static pressure side holes in the Pitot tube or the "clean-side" pressure tapping in the filter chamber, $T$ is the temperature of the gas stream (°K), and $DP_V$ is the differential pressure between the static and velocity pressure tappings of the Pitot tube (Pa).

The Pitot tube (5) is electrically isolated by means of an insulating sleeve (9) from the support ring (4) and clamp block (6) so that it may be used for the monitoring of dust tribo-electric charge associated with dust emissions. Alternatively, a bare wire (8) that spans the mouth of the bag (1) can be employed for the monitoring of the dust charge. This wire is supported from two electrically-insulated posts (7) mounted diametrically opposite each other on the top surface of the support ring (4).

Charged particles of dust striking, or passing in the vicinity of, the electrically-isolated Pitot tube or the alternative emissions wire, cause microscopic currents to flow in either of these probes. If such currents are brought outside of the filter by means of a suitable, low-noise cable, they can be amplified and used as a measure of the number rate of particles passing the probe. This may be expressed as:

$$S_E = n \times Q. \qquad (2)$$

Where $S_E$ is the magnitude of the emissions signal, $n$ is the number of particles per unit of gas volume in the vicinity of the emissions probe, and $Q$ is the volume flow rate of gas (m³/s) given by:

$$Q = V \times A. \qquad (3)$$

Where $A$ is the cross-sectional area of the mouth (m²) of the filter bag and $V$ is the gas velocity described in Equation 1.

Division of the particle number rate signal ($S_E$) by the gas flow rate determined from the Pitot tube will therefore yield a particle number density ($n$) that can be conveniently expressed as a number of particles per cubic metre of gas.

It is important that the flow measurement probe and, if separate, the emission wire probe, offer minimal restriction to the normal flow of gas through the bag and also to the brief reverse flow of gas from the cleaning pulse.

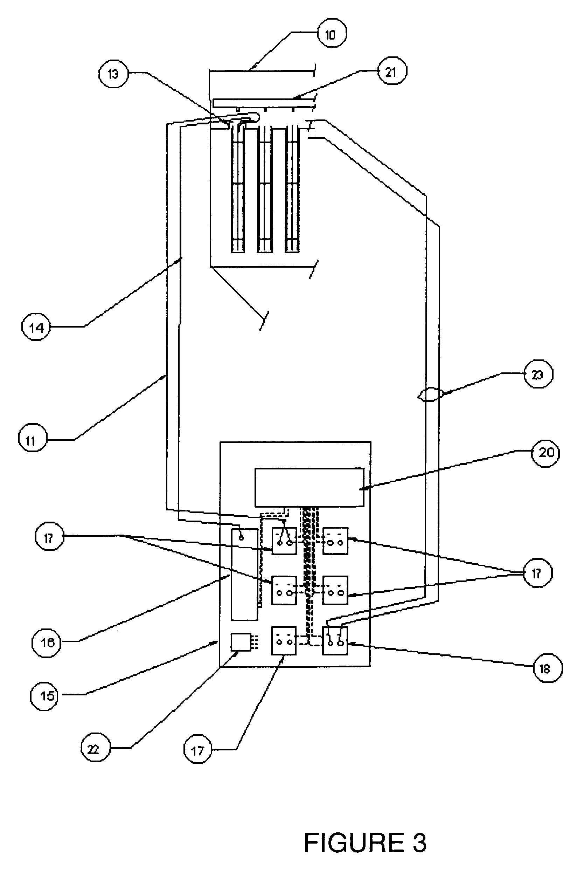

Figure 3 illustrates the measurement system schematically. It shows the relationship between the filter compartment (10), a single bag flow rate and emissions monitor (13) inside the filter and the instrumentation and data recording system in an enclosure (15) outside the filter.

The instrumentation system outside the filter generally comprises a protective enclosure that houses the differential pressure transducers (17) & (18) for measuring, respectively, the gas velocity pressure developed in the Pitot tube (5) and the differential pressure drop across the cell plate (23) of the filter compartment. Other pressure transducers, identified in Figure 3 as additional Pitot differential pressure transducers (17), are added as extra bag monitors are required. The current amplifier (16) of the emissions monitor, that is connected via low-noise cable (14) to the electrically-insulated Pitot tube (or, alternatively, to the emissions wire) is also shown in the instrumentation enclosure of Figure 3. A data recording instrument (20) with sufficient capacity to record the bag flow rates, bag emissions, cell DP and any other parameters that are germane to the bag performance investigation (such as gas temperature), and a suitable power supply (22), complete the instrumentation.

Apparatus as described above need not be installed in association with every bag in a filter. Indeed, by monitoring the performance of a few selected bags, it is possible to gauge the performance of the whole installation. Alternatively, the apparatus is well suited to testing the dust collecting, filter drag and dust dislodgment properties of individual types of filter bags or the efficiency of, for example, a trial modification to the pulse delivery system.

Various aspects of filter performance can be observed with the pulse-jet monitor. For example, continuous monitoring of the flow rate over a few collect/clean cycles can reveal the rate of dust build up per unit time and per collect cycle on the bag and how completely that dust can be dislodged by the cleaning pulse. The gradual decrease in flow rate through the bag as it becomes laden with dust is therefore readily measured and may be compared to that of other monitored bags to determine the relative suitability of various bag types to a particular filtering application. Dust emission levels can also be simultaneously monitored and related to the incidence, rate and intensity of cleaning as well as to bag age and media type.

As an alternative to continuous recording of flow, data collection can be restricted to the moments just prior to the cleaning pulse and, again, just after cleaning pulse. From this record, for example, the pre- and post-pulse values of flow can be used to calculate the volume of gas passing through the bag during each collect period, and the effectiveness of the ensuing cleaning pulse. Long-term collection of such data can be used to observe the changes that, for example, an increase in the pressure of the cleaning pulse might have on the peak restored (or post-pulse) bag flows. Pulse by pulse recording of the pre-and post-pulse bag flow over several thousand cleaning pulses also offers an ideal way of simultaneously monitoring and comparing the gradual ageing of different bag materials in a working filter.

## Claims

1. A filter bag monitoring system comprising flow rate measuring means for measuring gaseous flow rate at an exit of a filter bag, entrained particle measuring means for measuring the number of dust particles entrained in gas flowing from the exit of the filter bag, pressure drop measuring means for measuring pressure drop across the filter bag and a data processing means, the data processing means being capable of automatically processing and recording data transmitted from the flow rate measuring means, the entrained particle measuring means and the pressure drop measuring means.

2. A filter bag monitoring system according to claim 1 characterised in that the flow rate measuring means has a body that is so arranged that it is capable of functioning as the entrained particle measuring means.

3. A filter bag monitoring system according to claim 1 or claim 2 characterised in that the entrained particle measuring means comprises a tribo-electric charge sensor.

4. A filter bag monitoring system according to any one of the preceding claims characterised in that the flow rate measuring means comprises a Pitot tube.

5. A filter bag monitoring system according to claim 4 characterised in that the Pitot tube is so located that it does not significantly interfere with a pulse jet of cleaning air and the gas velocity at the location is representative of the velocity of gas flowing from the filter bag.

6. A filter bag monitoring system according to claim 4 or claim 5 when dependant on claim 3 characterised in that the Pitot tube has a body that is capable of functioning as the tribo-electric charge sensor.

**7.** A filter bag monitoring system according to claim 3 characterised in that the tribo-electric charge sensor comprises a wire supported across the exit from the filter bag by electrically-insulated stand-offs.

**8.** A filter bag monitoring system according to claim 3, claim 6 or claim 7 characterised in that the tribo-electric charge sensor is connected to a current amplifier by means of a low noise cable and the current amplifier is connected to the data processing means.

**9.** A method of monitoring the performance of a filter bag including passing flue gas containing entrained particles through a filter bag, measuring pressure drop across the filter bag, measuring the number of entrained particles emitted from the filter bag and measuring the velocity of gas exiting from the filter bag.

**10.** A method of monitoring the performance of a filter bag according to claim 9 wherein the method includes calculating the quantity of dust per unit volume contained in gas exiting from the filter bag.

# FIGURE 1

FIGURE 2

FIGURE 3

# EP 1 031 369 A1

**European Patent Office**

## EUROPEAN SEARCH REPORT

Application Number

EP 99 30 3786

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 116 395 A (WILLIAMS) 26 May 1992 (1992-05-26) * column 3, line 1 - column 4, line 32 * * column 11, line 7 - column 11, line 60 * --- | 1,3-10 | B01D46/42 B01D46/04 |
| Y | US 5 644 241 A (HEWELT) 1 July 1997 (1997-07-01) * column 2, line 34 - column 3, line 35 * --- | 1,3-10 | |
| Y | MONITOR TECHNOLOGIES LLC: "Particle Emission Monitor - Dustmeter " AVAILABLE FROM INTERNET: <URL:HTTP://WWW.MONITORMFG.COM/DUSTMETER.HTM> 27-1-2000,1998 - 31 December 1998 (1998-12-31), XP002129818 * the whole document * --- | 1,3-6, 8-10 | |
| A | US 5 711 785 A (MAXWELL) 27 January 1998 (1998-01-27) * column 3, line 10 - column 9, line 10 * --- | 1,4,5,9 | |
| A | US 5 094 675 A (PITT ET AL) 10 March 1992 (1992-03-10) * column 1, line 5 - column 4, line 33 * --- | 1,9 | TECHNICAL FIELDS SEARCHED (Int.Cl.7) B01D |
| A | EP 0 314 253 A (SHELL INTERNATIONALE RESEARCH MAATSCHAPPIJ B. V.) 3 May 1989 (1989-05-03) * column 3, line 53 - column 6, line 4 * ----- | 1,9,10 | |

The present search report has been drawn up for all claims

| Place of search | Date of completion of the search | Examiner |
|---|---|---|
| THE HAGUE | 4 February 2000 | Doolan, G |

**ANNEX TO THE EUROPEAN SEARCH REPORT
ON EUROPEAN PATENT APPLICATION NO.**

EP 99 30 3786

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2000

| Patent document cited in search report | | Publication date | Patent family member(s) | | Publication date |
|---|---|---|---|---|---|
| US 5116395 | A | 26-05-1992 | AT | 128379 T | 15-10-1995 |
| | | | CA | 2073413 A,C | 10-01-1993 |
| | | | DE | 69205095 D | 02-11-1995 |
| | | | DE | 69205095 T | 18-04-1996 |
| | | | EP | 0525417 A | 03-02-1993 |
| | | | MX | 9204003 A | 01-04-1993 |
| US 5644241 | A | 01-07-1997 | CA | 2177504 A,C | 26-03-1997 |
| US 5711785 | A | 27-01-1998 | NONE | | |
| US 5094675 | A | 10-03-1992 | DE | 3718846 A | 13-10-1988 |
| | | | DE | 3873668 A | 17-09-1992 |
| | | | WO | 8807404 A | 06-10-1988 |
| | | | EP | 0308470 A | 29-03-1989 |
| | | | ES | 2006616 A | 01-05-1989 |
| EP 314253 | A | 03-05-1989 | US | 4865627 A | 12-09-1989 |
| | | | AU | 606761 B | 14-02-1991 |
| | | | AU | 2448788 A | 04-05-1989 |
| | | | CA | 1315710 A | 06-04-1993 |
| | | | CN | 1033012 A,B | 24-05-1989 |
| | | | DE | 3877325 A | 18-02-1993 |
| | | | JP | 1148323 A | 09-06-1989 |

EPO FORM P0459

For more details about this annex : see Official Journal of the European Patent Office, No. 12/82